# EUROPÄISCHE PATENTSCHRIFT

(11) **EP 1 056 608 B1**
(45) Veröffentlichungstag und Bekanntmachung des Hinweises auf die Patenterteilung: **07.05.2003**
(21) Anmeldenummer: 99911689.0
(22) Anmeldetag: 19.02.1999
(51) Int. Cl.: B60G 9/02

(54) **KRAFTFAHRZEUGHINTERACHSE IN DEICHSELACHSAUSFÜHRUNG**
DRAWBAR-TYPE REAR AXLE FOR MOTOR VEHICLES
ESSIEU ARRIERE DU TYPE TIMON POUR VEHICULES AUTOMOBILES

(30) Priorität: 20.02.1998 DE 19807146
(43) Veröffentlichungstag der Anmeldung: 06.12.2000
(73) Patentinhaber: smart gmbh, 71272 Renningen (DE)
(72) Erfinder: KRONIGER, Wilhelm, D-71292 Friolzheim (DE)
(74) Vertreter: Dahmen, Toni
(86) Internationale Anmeldenummer: EP9901096
(87) Internationale Veröffentlichungsnummer: WO99042313

(56) Entgegenhaltungen:
- EP-A- 0 063 370
- EP-A- 0 811 512
- DE-A- 4 422 875
- US-A- 3 709 516

## Beschreibung

Die Erfindung betrifft eine Kraftfahrzeughinterachse in Deichselachsausführung mit einem Deichselachskörper der am Fahrzeugaufbau zum einen mittels eines kardanisch beweglichen Deichselgelenks und zum anderen an seinen freien Enden mit Hilfe von zwei zumindest annähernd in einer Fahrzeugquerebene liegenden Streben gelagert ist, wobei das Deichselgelenk tiefer liegt als die deichselseitigen Gelenke der Streben, wobei jede Strebe sich über ein elastisches Schwenkgelenk am Fahrzeugaufbau abstützt, wobei diese aufbauseitigen Schwenkgelenke höher liegen als die deichselseitigen Schwenkgelenke und wobei der Deichselachskörper zumindest in Fahrzeugquerrichtung elastisch verformbar ist.

Eine derartige Deichselachse ist aus der EP 0 811 512 A1 bekannt. Der Deichselachskörper ist im Bereich des Deichselgelenks entweder gelenkig ausgeführt oder er hat dort eine elastisch verformbare Zone. Das Verformen des Deichselachskörpers um eine Gelenkstelle bzw. Gelenkzone führt besonders bei einem beidseitigen Einfedern zu einem starken Radversatz in Fahrtrichtung. Dieser Versatz führt besonders bei leichten Kleinwagen zu einer unerwünschten Zuckelbewegung.

Ferner ist aus der DE 44 22 875 A1 eine Deichselachse mit Streben, die die Enden des Deichselachskörpers durchgehend verbinden, bekannt. Die Streben sind hier zwei gekrümmte, annähernd parallel zueinander verlaufende Stangen, die an ihren Enden zusammengeführt sind und so einen doppelseitigen Dreiecklenker bilden. Der Doppeldreiecklenker ist an seinen Enden beiderseits am Deichselachskörper hinter der Radmittenquerebene schwenkbar angelenkt. In seinem mittleren Bereich ist er über eine ebenfalls schwenkbare Längspendelstütze statisch bestimmt am Fahrzeugaufbau abgestützt. Beim Ein- und Ausfedern führt das aus dem Doppeldreiecklenker und der Längspendelstütze gebildete Hebelgetriebe eine scherenartige Bewegung aus. Das Hebelgetriebe hat durch die vielen Gelenkstellen eine so geringe Quersteifigkeit, daß eine steife Seitenkraftabstützung und/oder ein gezieltes Wank- und/oder Seitenkraftsteuern nicht oder nur mit hohem Bauaufwand möglich ist.

Der vorliegenden Erfindung liegt das Problem zugrunde, eine Fahrzeughinterachse in Deichselachsbauweise zu schaffen, die bei positiven wank- und/oder seitenkraftsteuernden Eigenschaften und bei geringem Fertigungs- und Montageaufwand mit möglichst wenigen Gelenken und Lenkern auskommt.

Das Problem wird mit den Merkmalen des Hauptanspruchs gelöst. Der Deichselachskörper umfaßt ein elastisches Deichselrohr, das über seine Gesamtlänge einen unveränderlichen Rohrquerschnitt aufweist. Die Größenordnung der Verformung des Deichselrohres liegt im Bereich der Verformungssumme der elastokinematischen Gelenke mindestens einer Strebe.

Der Deichselachskörper ist über ein Deichselgelenk und zwei Streben bzw. Lenker gelagert. Jede Strebe stützt sich über ein elastisches Schwenkgelenk am Fahrzeugaufbau ab, wobei die beiden aufbauseitigen Schwenkgelenke höher liegen als die deichselseitigen Schwenkgelenke der Streben. Der Deichselachskörper ist zumindest in Fahrzeugquerrichtung elastisch verformbar, wobei die Größenordnung dieser Verformung im Bereich der Verformungssumme der elastokinematischen Gelenke mindestens einer Strebe liegt.

Der Deichselachskörper stützt sich achsführend über maximal drei Gelenkstellen am Fahrzeugaufbau ab. Gegebenenfalls können die Streben am Fahrzeugaufbau beispielsweise auch auf einem Gelenkzapfen angelenkt werden, so daß sich am Fahrzeugboden nur zwei achsführende Anlenkstellen befinden.

Die Anzahl der Gelenke ist auf fünf beschränkt: die vier Gelenke an den Strebenenden und das Deichselgelenk. Die vier Strebengelenke können je nach Achsausführung unabhängig von ihren elastischen Einlagen z.B. Schwenk- oder Kugelgelenke sein. Die geringe Gelenkanzahl ermöglicht einen steifen Achsverbund.

Der Deichselachskörper, der einen offenen oder geschlossenen Querschnitt hat, ist elastisch ausgebildet. Das Zulassen einner elastischen Verformbarkeit hat zum einen den Vorteil, daß sich der Deichselachskörper beim Einfedern die durch die Schwenkbewegung der Streben bedingte Spurweitenänderung mitmacht. Zum anderen kann seine Wandstärke im Vergleich zu den üblichen De-Dion-Achsen verringert werden, ohne daß sich die Seitenkraftabstützung verschlechtert. Denn die im Radmittenbereich angeordneten Streben leiten bei Kurvenfahrt die Seitenkräfte direkt an den Fahrzeugaufbau weiter.

Weitere Einzelheiten der Erfindung ergeben sich aus den nicht zitierten Unteransprüchen und der nachfolgenden Beschreibung einer schematisch dargestellten Ausführungsform:
- Figur 1:: Deichselachse in der Rückansicht;
- Figur 2:: Deichselachse in der Draufsicht;
- Figur 3:: quergeschnittene Deichselachse in der Seitenansicht.

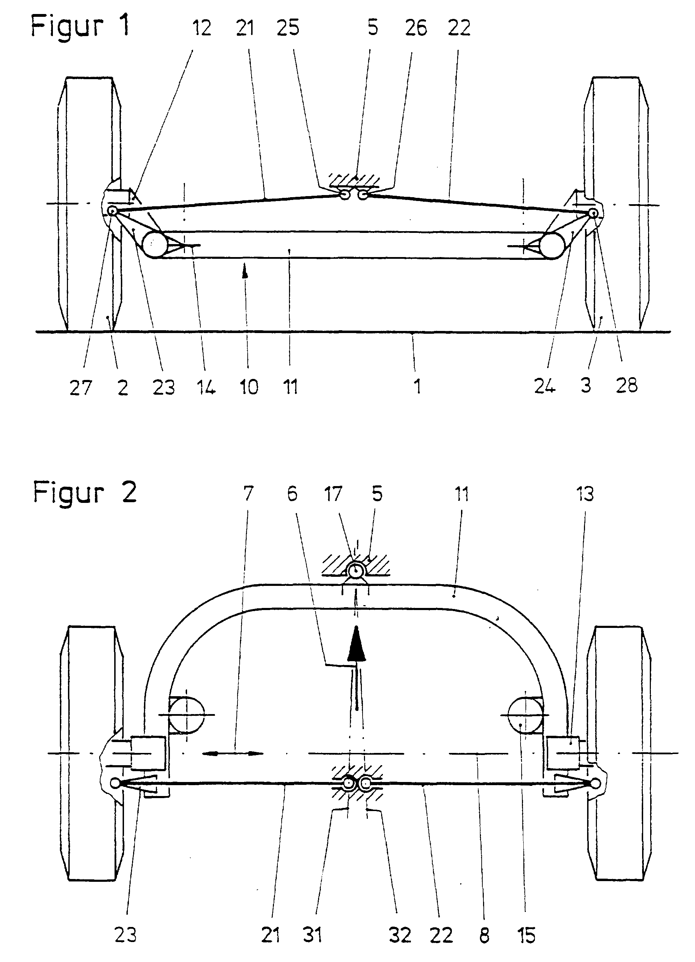

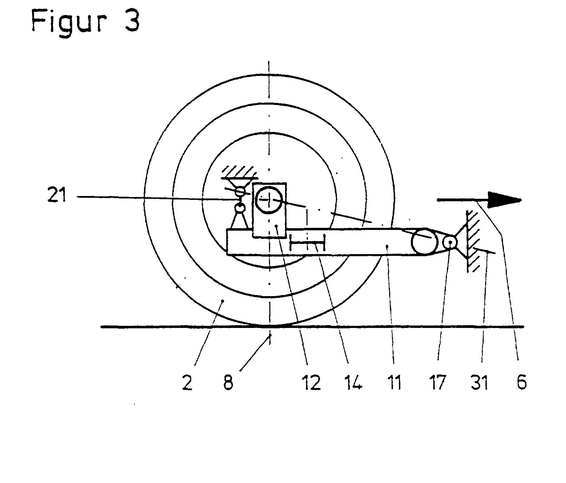

Die Figuren 1-3 zeigen eine Deichselachse für eine antreibbare Hinterachse eines Kraftfahrzeuges. Die Deichselachse basiert auf einem gekrümmten Deichselachskörper (10), an dessen Enden je ein Rad (2, 3) gelagert ist. Der Deichselachskörper (10) ist zum einen im Bereich der Fahrzeugmitte - in Fahrtrichtung gesehen vor den Rädern - am Fahrzeugaufbau (5) angelenkt. Zum anderen ist an den beiden Enden des Deichselachskörpers (10) hinter der Radmittenquerebene (8) je eine Strebe (21, 22) angeordnet, die sich im Ausführungsbeispiel ebenfalls im Bereich der Fahrzeugmitte am Fahrzeugaufbau (5) abstützt.

Der Deichselachskörper (10) ist im Ausführungsbeispiel ein u-förmig gebogenes, elastisches Deichselrohr (11) mit einem über seine Gesamtlänge unveränderlichen Rohrquerschnitt. Das Deichselrohr (11) erstreckt sich beispielsweise annähernd parallel zur Fahrbahnoberfläche (1) unterhalb der Hinterachsenmittellinie. Die seitlichen Schenkel des Deichselrohres laufen im Bereich der Räder im wesentlichen parallel zu diesen, während das mittlere Verbindungsstück quer zur Fahrtrichtung ausgerichtet ist. Das Deichselrohr (11) trägt in der Mitte ein Deichselgelenk (17). Über das alle Längskräfte übertragende Deichselgelenk (17) ist das Deichselrohr (11) kardanisch am Fahrzeugaufbau (5) abgestützt. Das tiefliegende Deichselgelenk (17) minimiert das Brems- und Anfahrnicken des Fahrzeugaufbaus.

Am Deichselrohr (11) sind im Bereich seiner Enden schräg nach oben und außen ragende Radträger (12, 13) befestigt. Vor den Radträgern (12, 13) sind an der Innenseite des Deichselachskörpers (10) die Konsolen (14) und (15) zur Anlenkung der nicht dargestellten Feder- und Dämpferelemente angeordnet. Hinter den Radträgern (12, 13) befinden sich an den Enden des Deichselrohres (11) die Kragarme (23) und (24). Diese Kragarme (23, 24) stehen vom Deichselrohr (11) ebenfalls schräg nach außen und oben ab.

An ihren freien Enden befinden sich beispielsweise Schwenkgelenke (27, 28), deren Mitten im Ausführungsbeispiel knapp unter der Hinterachsmittellinie liegen. Gleichzeitig liegen die Mitten der Gelenke (27, 28) hinter der Radmittenquerebene (8).

Die Streben (21, 22), die beispielsweise in einer Fahrzeugquerebene liegen, sind bei neutral ausgerichtetem Fahrzeug zur Fahrzeugmitte hin ansteigend angeordnet. Dadurch liegen die aufbauseitigen Schwenkgelenke (25, 26) in Richtung der Fahrzeughochachse gesehen höher als die deichselseitigen Gelenke (27, 28). Die in der Regel in elastischen Gummigelenken gelagerten Streben (21, 22) stützen einen großen Anteil der Seitenkräfte am Fahrzeugaufbau (5) ab.

Die in Figur 1 gezeigte Schrägstellung der Streben (21, 22) führt durch die überbestimmte Lagerung der Hinterachse bei einem gleichseitigen Einfedern der Deichselachse u.a. zu Druckkräften in den Streben (21, 22) und zu Biege- und Torsionskräften im Deichselrohr (11). Hierbei werden zum einen die gummielastischen Einlagen der Schwenkgelenke (25-29) einseitig komprimiert und zum anderen wird das Deichselrohr (11) - in Abhängigkeit von der gewählten Bauteilelastizität - aufgebogen, d.h. der Abstand zwischen seinen freien Enden vergrößert sich. Da das Deichselrohr (11) ein torsionssteifes Profil hat, ist die Torsion und eine damit ggf. einhergehende Sturzänderung vernachlässigbar.

Beim wechselseitigen Einfedern wird die zum kurvenäußeren Rad führende Strebe auf Druck belastet, während in der zum kurveninneren Rad führenden Strebe sich Zug einstellt. Dabei wird das kurvenäußere Rad nach außen gedrängt. Das kurveninnere Rad wird in Richtung zur Fahrzeugmittellinie gezogen.

Da die Räder hierbei um die gedachten Achsen (31) bzw. (32) pendeln, wandert das kurvenäußere Rad annähernd um den Betrag nach vorn, um den das kurveninnere Rad nach hinten wandert. Durch die Kopplung der Räder (2, 3) über das Deichselrohr (11) stellt sich ein von Null abweichender Fahrachswinkel ein. Hierdurch wirkt die Hinterachse wankuntersteuernd.

Unabhängig hiervon kann eine am kurvenäußeren Rad anstehende Seitenkraft eine vergleichbare Änderung des Fahrachswinkels bewirken. Für den Fall, daß die Querabstützung des Deichselgelenks (17) weicher als die Gelenke der Streben (21, 22) ausgelegt ist, gibt beim Auftreten der Seitenkraft das Deichselgelenk (17) stärker nach als die auf Druck belastete Strebe, so daß die Hinterachse auch seitenkraftuntersteuernd wirkt. In diesem Fall liegen die Streben (21, 22) in Fahrtrichtung (6) gesehen mindestens um den seitenkraftbedingten Reifennachlauf versetzt hinter der Radmittenquerebene (8).

Um die beim Ein- bzw. Ausfedern auf das Deichselrohr (11) wirkenden Biegekräfte zu minimieren, sollen die Streben (21, 22) so lang wie möglich sein. Bei vorhandenem Platz können sie sich jeweils über die Fahrzeugmitte hinaus bis zum gegenüberliegenden Radbereich erstrecken. Die Streben kreuzen sich in diesem Fall, so daß beide Streben beispielsweise geringfügig schräg zur Fahrzeugquerrichtung (7) ausgerichtet sind.

### Bezugszeichenliste

- 1: Fahrbahn
- 2, 3: Räder

- 5: Fahrzeugaufbau
- 6: Fahrtrichtung
- 7: Fahrzeugquerrichtung
- 8: Radmittenquerebene

- 10: Deichselachskörper
- 11: Deichselrohr
- 12, 13: Radträger
- 14, 15: Feder-Dämpfer-Konsolen

- 17: Deichselgelenk

- 21, 22: Streben, Lenker
- 23, 24: Kragarme
- 25, 26: aufbauseitige Schwenkgelenke
- 27, 28: deichselseitige Schwenkgelenke

- 31: Schwenkachse des Radträgers (12)
- 32: Schwenkachse des Radträgers (13)

## Patentansprüche

1. Kraftfahrzeughinterachse in Deichselachseausführung mit einem Deichselachskörper (10) der am Fahrzeugaufbau (5) zum einen mittels eines kardanisch beweglichen Deichselgelenks (17) und zum anderen an seinen freien Enden mit Hilfe von zwei zumindest annähernd in einer Fahrzeugquerebene liegenden Streben (21, 22) gelagert ist,
- wobei das Deichselgelenk (17) tiefer liegt als die deichselseitigen Gelenke (27, 28) der Streben (21, 22),
- wobei jede Strebe (21, 22) sich über ein elastisches Schwenkgelenk (25, 26) am Fahrzeugaufbau (5) abstützt,
- wobei diese aufbauseitigen Schwenkgelenke (25, 26) höher liegen als die deichselseitigen Schwenkgelenke (27, 28) und
- wobei der Deichselachskörper (10) zumindest in Fahrzeugquerrichtung (7) elastisch verformbar ist,
**dadurch gekennzeichnet,**
- **daß** der Deichselachskörper (10) ein elastisches Deichselrohr (11) ist, das über seine Gesamtlänge einen unveränderlichen Rohrquerschnitt aufweist und
- **daß** die Größenordnung der Verformung des Deichselrohres (11) im Bereich der Verformungssumme der elastokinematischen Gelenke mindestens einer Strebe (21, 22) liegt.

2. Kraftfahrzeughinterachse gemäß Anspruch 1, **dadurch gekennzeichnet, daß** die Elastizität des Deichselgelenks (17) in Fahrzeugquerrichtung (7) mindestens doppelt so groß ist wie die der elastokinematischen Gelenke (25-28).

3. Kraftfahrzeughinterachse gemäß Anspruch 1, **dadurch gekennzeichnet, daß** das Deichselrohr (11) einen kreisringförmigen Querschnitt hat.

4. Kraftfahrzeughinterachse gemäß Anspruch 1, **dadurch gekennzeichnet, daß** die Streben (21, 22) mit ihren deichselseitigen Gelenken (27, 28) in die jeweiligen Felgenräume der Räder (2, 3) hineinragen.

## Claims

1. A motor vehicle rear axle of drawbar design with a drawbar axle body (10) which is mounted on the vehicle bodywork (5) on one hand by means of a universal-type drawbar joint (17) and on the other at its free ends on two members (21, 22) which lie at least approximately in a transverse vehicle plane,
- the drawbar joint (17) lying below the drawbar-mounted joints (27, 28) on the members (21, 22),
- each member (21, 22) being supported on the vehicle bodywork (5) by an elastic pivoting joint (25, 26),
- these bodywork-mounted pivoting joints (25, 26) lying above the drawbar-mounted pivoting joints (27, 28) and
- the drawbar axle body (10) being elastically deformable at least transversely in relation to the vehicle (7),
**characterised in that**
- the drawbar axle body (10) is an elastic drawbar tube (11) which has a constant tubular cross section over its entire length and
- the extent of the deformation of the drawbar tube (11) lies in the region of the deformation sum of the elasto-kinematic joints of at least one member (21, 22).

2. A motor vehicle rear axle in accordance with claim 1,
**characterised in that**
the elasticity of the drawbar joint (17) transversely in relation to the vehicle is at least twice that of the elasto-kinematic joints (25-28).

3. A motor vehicle rear axle in accordance with claim 1,
**characterised in that**
the drawbar tube (11) has a circular cross section.

4. A rear motor vehicle axle in accordance with claim 1,
**characterised in that**
the drawbar-mounted joints (27, 28) on the members (21, 22) project into the corresponding rim spaces of the wheels (2, 3).

## Revendications

1. Essieu arrière de véhicule en réalisation d'essieu à timon avec un corps d'essieu à timon (10) monté sur la superstructure du véhicule (5) d'une part au moyen d'une articulation de timon (17) mobile à la cardan et d'autre part à ses extrémités libres à l'aide de deux entretoises (21, 22) agencées au moins approximativement dans un plan transversal du véhicule,
dans lequel l'articulation de timon (17) est disposée plus profondément que les articulations (27, 28) côté timon des entretoises (21, 22),
chaque entretoise (21, 22) s'appuie sur la superstructure du véhicule (5) au moyen d'une articulation pivotante (25, 26) élastique,
ces articulations pivotantes (25, 26) du côté superstructure sont disposées plus haut que les articulations pivotantes (27, 28) côté timon, et
le corps de timon d'essieu à timon (10) est élastiquement déformable au moins dans la direction transversale du véhicule (7),
**caractérisé en ce que** :
le corps d'essieu à timon (10) est un tube de timon (11) élastique qui présente une section de tube invariable sur la totalité de sa longueur, et
l'ordre de grandeur de la déformation du tube de timon (11) est dans la plage de la somme des déformations des articulations à cinématique élastique d'au moins une entretoise (21, 22).

2. Essieu arrière de véhicule selon la revendication 1, **caractérisé en ce que** l'élasticité de l'articulation de timon (17) en direction transversale au véhicule (cette) est au moins deux fois plus importante que celle des articulations à cinématique élastique (25-28).

3. Essieu arrière de véhicule selon la revendication 1, **caractérisé en ce que** le tube de timon (11) a une section de forme circulaire droite.

4. Essieu arrière de véhicule selon la revendication 1, **caractérisé en ce que** les entretoises (21, 22) avec leurs articulations (27, 28) côté timon pénètrent dans les espaces respectifs des jantes des roues (2, 3).
